# FASCICULE DE BREVET EUROPEEN

(11) **EP 2 022 273 B1**
(45) Date de publication et mention de la délivrance du brevet: **26.07.2017**
(21) Numéro de dépôt: 07731734.5
(22) Date de dépôt: 13.03.2007
(51) Int. Cl.: H04N 21/242

(54) **TRANSMISSION D'UN SIGNAL DE SYNCHRONISATION DANS UN RESEAU A COMMUTATION PAR PAQUETS**
SENDEN EINES SYNCHRONISIERUNGSSIGNALS IN EINEM PAKETNETZ
TRANSMITTING A SYNCHRONIZING SIGNAL IN A PACKET NETWORK

(30) Priorité: 13.03.2006 FR 0650837
(43) Date de publication de la demande: 11.02.2009
(73) Titulaire: Thomson Licensing, 92130 Issy-les-Moulineaux (FR)
(72) Inventeur: TAPIE, THIERRY, F-35700 Rennes (FR); DEFRANCE, SERGE, F-35700 Rennes (FR); HUGUIES, BERTRAND, 44300 Nantes (FR)
(74) Mandataire: Huchet, Anne
(86) Numéro de dépôt international: PCT/FR2007/050918
(87) Numéro de publication internationale: WO 2007/104891

(56) Documents cités:
- EP-A- 1 471 745

## Description

### Domaine de l'invention

La présente invention se rapporte au domaine des équipements vidéo.

La présente invention se rapporte plus particulièrement à un dispositif émetteur et à un dispositif récepteur pour la transmission d'un signal de synchronisation, par exemple de type « *Genlock* » (verrouillage de synchronisation), sur un réseau de communication à commutation par paquets, par exemple de type IP (« *Internet Protocol »).*

### Etat de la technique

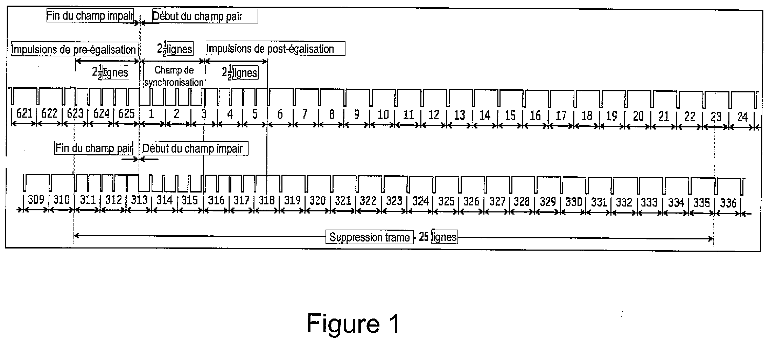

Dans l'état de la technique, la synchronisation d'équipements vidéo (caméras, etc...) dans un studio est réalisée par la transmission d'un signal de synchronisation communément appelé *« genlock »* ou encore « *black burst* », comme cela est représenté Figure 1.

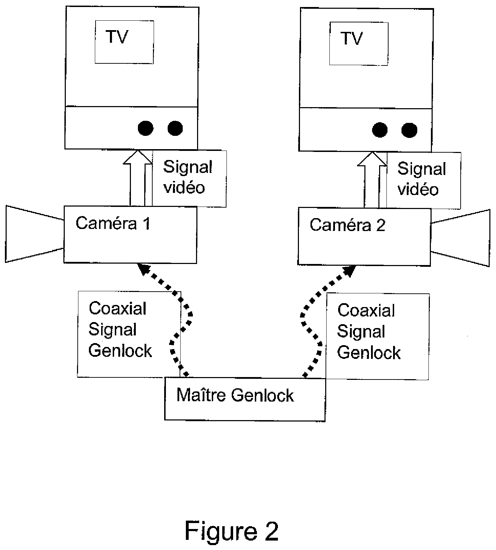

Ce signal est acheminé aux divers équipements à synchroniser par un câble coaxial. Rien d'autre ne circule dans ce câble. Ce mode de transmission assure un délai de transmission constant sans « *jitter »* (gigue). A partir de ce signal, tout équipement est en mesure de reconstruire une horloge de cadencement propre à son fonctionnement et qui garantira que toute image générée par ce dernier sera rigoureusement en phase avec toutes les images des équipement voisins. Typiquement, deux caméras généreront chacune une vidéo d'un contenu différent mais rigoureusement en phase et en fréquence l'une par rapport à l'autre, comme cela est représenté Figure 2.

Un inconvénient des systèmes de l'art antérieur est l'utilisation d'un câble coaxial spécifique.

Un des buts de la présente invention est de remplacer le câble coaxial par une liaison IP/Ethernet.

Or, un réseau IP/Ethernet introduit de façon connue un fort jitter dans la transmission. Le problème qui se pose est celui consistant à transmettre un top image au travers d'un réseau IP/Ethernet rigoureusement en phase avec l'émission et parfaitement synchrone de l'horloge côté réception. Ceci revient à trouver un moyen permettant de générer sur un équipement distant connecté sur un réseau IP, introduisant un jitter et une latence, une horloge vidéo et un top de synchronisation image. Ces deux signaux permettent de régénérer un signal de genlock rigoureusement en phase avec le signal de genlock côté émission.

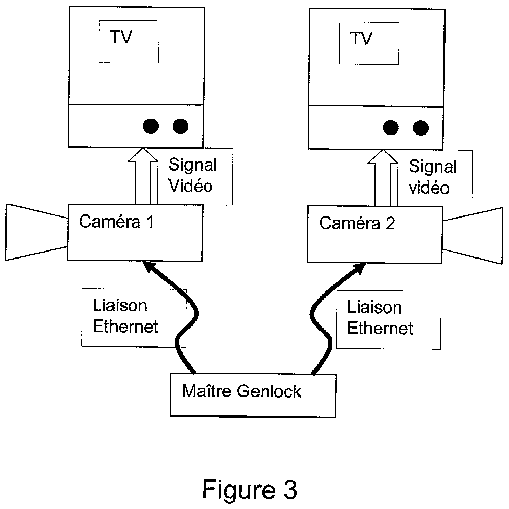

En effet, la transmission du signal de genlock est effectuée sur IP/Ethernet dans les studios, comme cela est représenté Figure 3. La transmission vidéo existe déjà sur IP. Il n'en reste pas moins qu'il faut réussir à synchroniser les caméras (ou autre équipement) avec des contraintes identiques par rapport à l'utilisation de câble coaxial. Or sur IP/Ethernet, le délai de transmission peut être variable, le jitter très important en regard des contraintes vidéo.

L'art antérieur connaît, par la demande de brevet européen EP 1 471 745 (Sony), un procédé de synchronisation vidéo. Cette demande de brevet européen décrit un procédé pour synchroniser la phase d'un générateur de signal de synchronisation d'image local d'un processeur de données en communication avec un réseau commuté par paquets asynchrone avec la phase d'un générateur de signal de synchronisation d'image de référence d'un processeur de données vidéo de référence également relié au réseau, le processeur local et le processeur de référence ayant des horloges respectives, les générateurs de signal de synchronisation d'image local et de référence générant des signaux de synchronisation d'image périodiques synchrones avec les horloges de référence et locale, comprenant respectivement les étapes suivantes :
- synchronisation en fréquence des horloges locales et de référence ;
- envoi par le processeur de données de référence, à travers le réseau, au processeur de données local d'un paquet temporel image fournissant des données de synchronisation d'image de référence indiquant la différence temporelle, mesurée par rapport à l'horloge du processeur de référence, entre l'instant où le paquet temporel d'image est lancé sur le réseau et l'instant de production du signal de synchronisation d'image de référence ; et
- contrôle par le processeur local du moment où le signal de synchronisation d'image local est produit, en relation avec les données de synchronisation d'image de référence et l'instant d'arrivée du paquet temporel.

Le procédé objet de cette demande de brevet européen s'applique à un réseau commuté par paquets, mais à temps de transmission constant. De plus, dans ce procédé, les paquets sont émis à des instants déterminés suivant la disponibilité du réseau et l'échantillonnage a lieu lors de l'émission du paquet.

### Exposé de l'invention

Le problème technique que la présente invention se propose de résoudre est la transmission d'un signal de synchronisation dans un réseau commuté par paquets à temps de transmission non constant.

A cet effet, la présente invention concerne, selon un premier aspect, un dispositif apte à émettre des paquets dans un réseau de communication par paquets comportant au moins deux stations, selon la revendication 1. De préférence, m est un entier naturel supérieur ou égal à deux.

Avantageusement, le signal de synchronisation est de type Genlock.

Selon un mode de réalisation, le second compteur est un compteur PCR (*« Program Clock Reference »).*

Le premier compteur côté émission peut être un compteur 40 ms.

Selon un mode de mise en oeuvre particulier, la base de temps synchronisée sur toutes les stations du réseau est de type IEC61588.

La présente invention concerne, selon un second aspect, un dispositif apte à recevoir des paquets dans un réseau de communication par paquets comportant au moins deux stations, selon la revendication 6. De préférence, le signal de synchronisation est de type Genlock.

Selon un mode de réalisation, le premier compteur est un compteur PCR (*« Program Clock Reference »).*

Le second compteur côté réception peut être un compteur 40 ms.

Selon un mode de mise en oeuvre particulier, la base de temps synchronisée sur toutes les stations du réseau est de type IEC61588.

### Brève description des dessins

On comprendra mieux l'invention à l'aide de la description, faite ci-après à titre purement explicatif, d'un mode de réalisation de l'invention, en référence aux figures annexées :
- la Figure 1 illustre un signal genlock analogique ;
- la Figure 2 illustre la transmission d'un signal genlock par un câble coaxial ;
- la Figure 3 illustre la transmission d'une information genlock à travers un réseau IP/Ethernet ;
- la Figure 4 illustre l'interfaçage entre un domaine analogique et un réseau IP/Ethernet ;
- la Figure 5 illustre une interface analogique/IP-Ethernet côté émission ;
- la Figure 6 représente l'échantillonnage du compteur PCR par T_{ech};
- la Figure 7 illustre la génération du signal genlock côté réception ;
- la Figure 8 représente un objectif à atteindre au moyen de la présente invention ;
- la Figure 9 illustre la transmission d'une information top image potentielle ;
- la Figure 10 représente des rampes de comptage PCR et 40 ms du côté émission et du côté réception ; et
- la Figure 11 illustre des rampes de comptage PCR et 40 ms côté réception.

### Description détaillée des modes de réalisation de l'invention

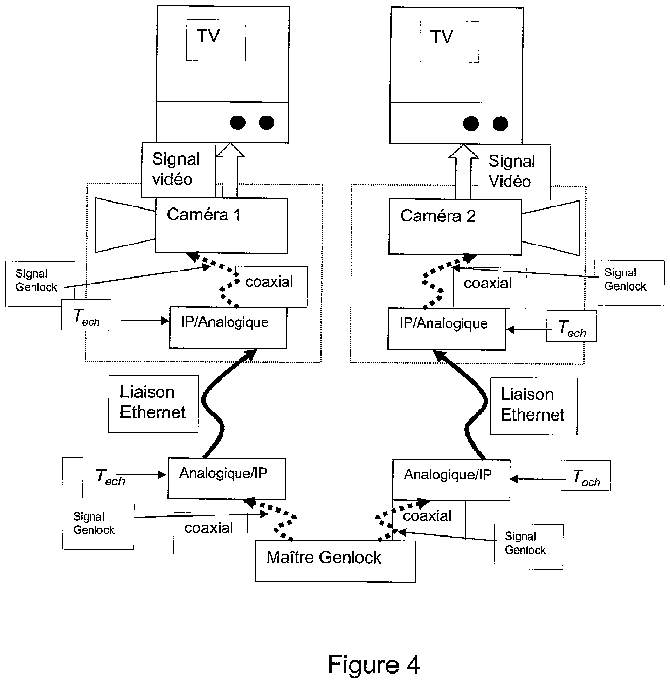

Le monde actuel analogique est interfacé vers le réseau IP/Ethernet côté émission, et le réseau IP/Ethernet est interfacé vers le monde analogique côté réception, comme cela est illustré Figure 4. Le « Maître Genlock » (côté émission) représenté Figure 4 est connecté à une interface Analogique/IP et les caméras 1 et 2 (côté réception) représentées Figure 4 sont connectées à une interface IP/Analogique. Ces interfaces seront à terme incluses dans les équipements eux-mêmes.

Un *T_{ech}* est généré à partir d'une première couche de synchronisation, par exemple IEEE1588. Le protocole PTP basé sur 1588 permet d'obtenir une synchronisation entre les équipements connectés sur un réseau Ethernet de l'ordre de la microseconde. En d'autres termes, toutes les bases de temps de chaque équipement évoluent en même temps à une précision près de l'ordre de la microseconde. Ces bases de temps peuvent être utilisées dans ce cas pour générer chacune son propre top *T_{ech}.* L'utilisation de la couche 1588 n'est pas un passage obligé. Tout système permettant de fournir un des top *T_{ech}* sur les différents équipements connectés sur un réseau peut convenir. Typiquement, une première application fonctionne avec un top de période 5ms issu d'une couche physique de transmission sans fil.

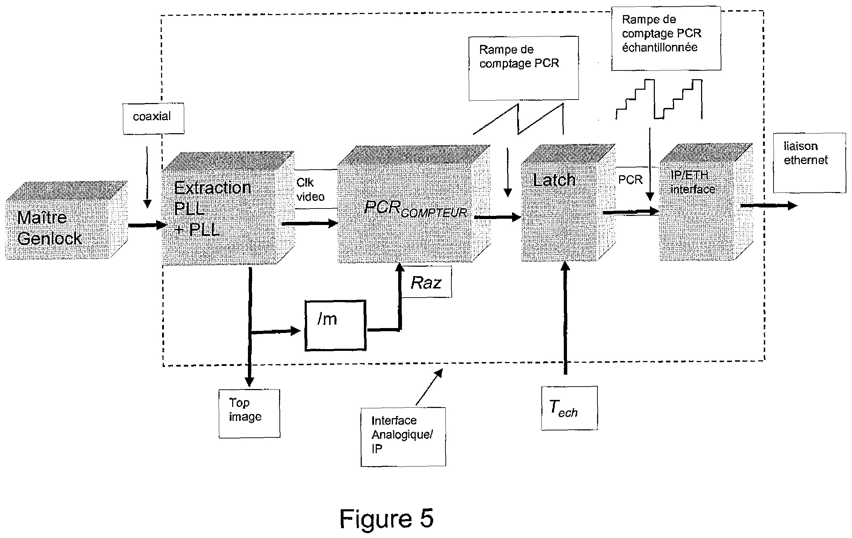

A partir du signal genlock d'entrée issu du Genlock master (ou « Maître Genlock »), représenté Figure 5, on extrait les informations (extraction PLL ou « *Phase Lock Loop* ») afin de récupérer une horloge vidéo de cadencement (notée Clk vidéo sur la Figure 5) pour le compteur PCR. La partie extraction est en charge de générer un top image à chaque début d'image. Toutes les « m » images, le compteur PCR (« *Program Clock Reference »)* est remis à 0. La sortie du compteur évolue suivant une rampe de comptage modulo 40 ms. La sortie du compteur PCR est ensuite échantillonnée toutes les périodes *T_{ech}.* Les échantillons PCR sont transmis sur le réseau Ethernet vers le côté réception qui, à partir de ces informations, sera en charge de reconstruire le signal de départ genlock rigoureusement en phase. Le premier compteur 40 ms est inclus dans le bloc « Extraction PLL » de la Figure 5.

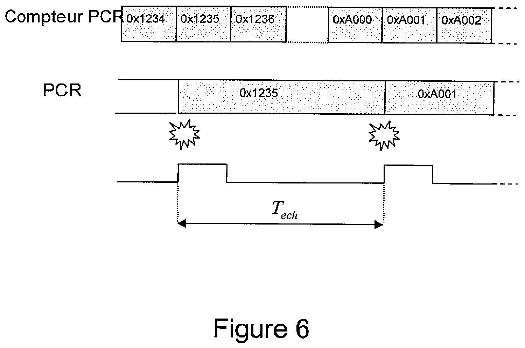

### La Figure 6 représente l'échantillonnage du compteur PCR par T_{ech}

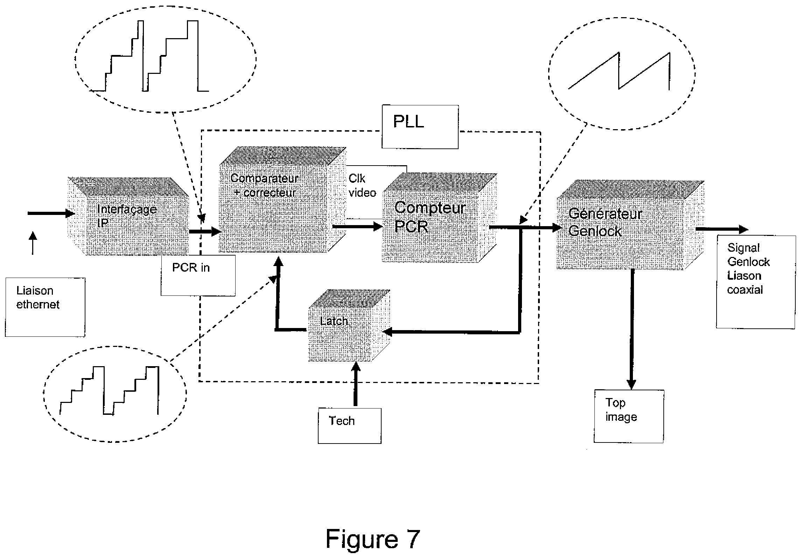

Côté réception, il est nécessaire de récupérer le PCR et reconstruire le signal genlock. Comme cela est illustré Figure 7, les informations PCR arrivent par la liaison Ethernet. Ces PCR, échantillonnés côté émission à intervalles réguliers T_{ech} arrivent à intervalles irréguliers côté réception, ceci étant dû majoritairement au jitter introduit par le transport des PCR par IP. Ces échantillons (PCR) sont repris en compte à intervalles réguliers Tech et de ce fait, la majeure partie de la gigue introduite lors du transport de paquets est éliminée. La PLL assure un filtrage complémentaire. On retrouve donc en sortie du compteur PCR une rampe modulo 40 ms régulière. Le second compteur 40 ms est inclus dans le bloc « Générateur Genlock » de la Figure 7.

Les caractéristiques de la boucle à verrouillage de phase (PLL) garantissent une horloge avec un minimum de gigue (jitter). Les rampes de comptage PCR côté émission et réception sont rigoureusement en phases au coup d'horloge près. La problématique de récupération de rythme est résolue de cette manière. La contrainte majeure pour que cela soit réalisable est que les instants d'échantillonnage des compteurs PCR à l'émission et la réception soient identiques.

L'imprécision entre les instants d'échantillonnages de l'émission et de la réception est absorbée par la PLL dont la bande passante est appropriée. Ceci est équivalent à avoir des instants d'échantillonnage identiques avec une gigue (jitter) supérieure dans l'arrivée des PCR, gigue filtrée par la PLL.

Le problème technique posé à l'homme du métier est celui consistant à générer ou transmettre un top image au travers d'un réseau IP/Ethernet (introduisant un fort jitter) rigoureusement en phase avec l'émission et parfaitement synchrone de l'horloge côté réception. Dès l'instant où ceci est réalisable, la construction du signal genlock est alors possible.

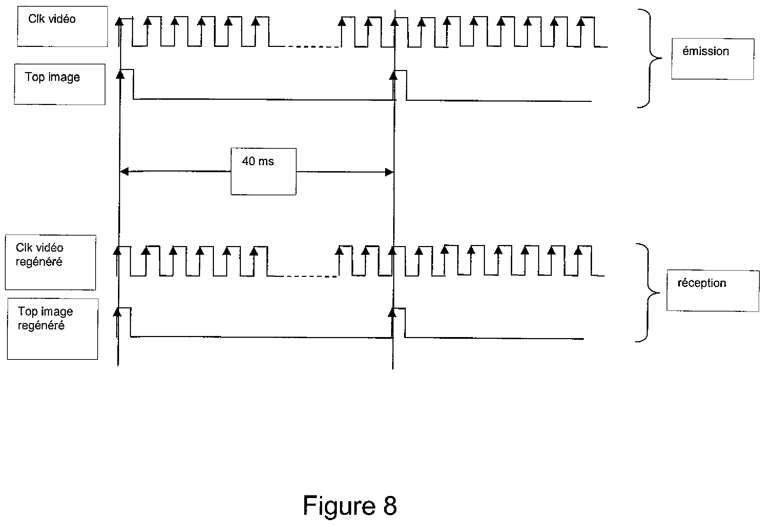

La Figure 8 représente un objectif à atteindre au moyen de la présente invention.

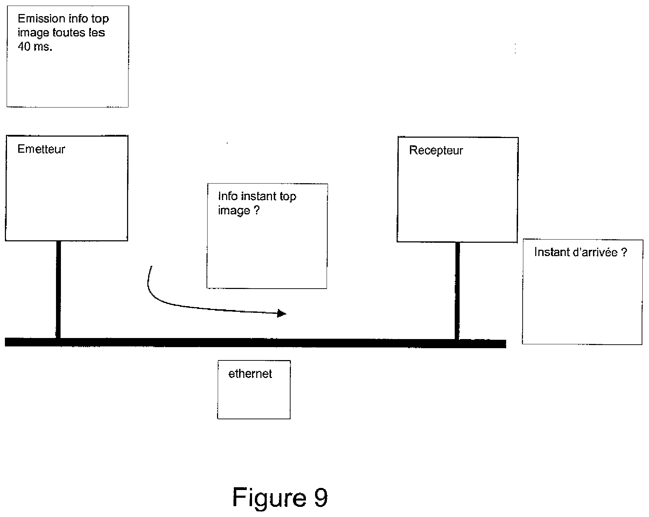

La Figure 9 illustre la transmission d'une information top image potentielle. La transmission d'un paquet IP contenant une information quelle qu'elle soit ne peut pas arriver au bon instant (latence, jitter réseau etc...) donc ce n'est pas une bonne solution.

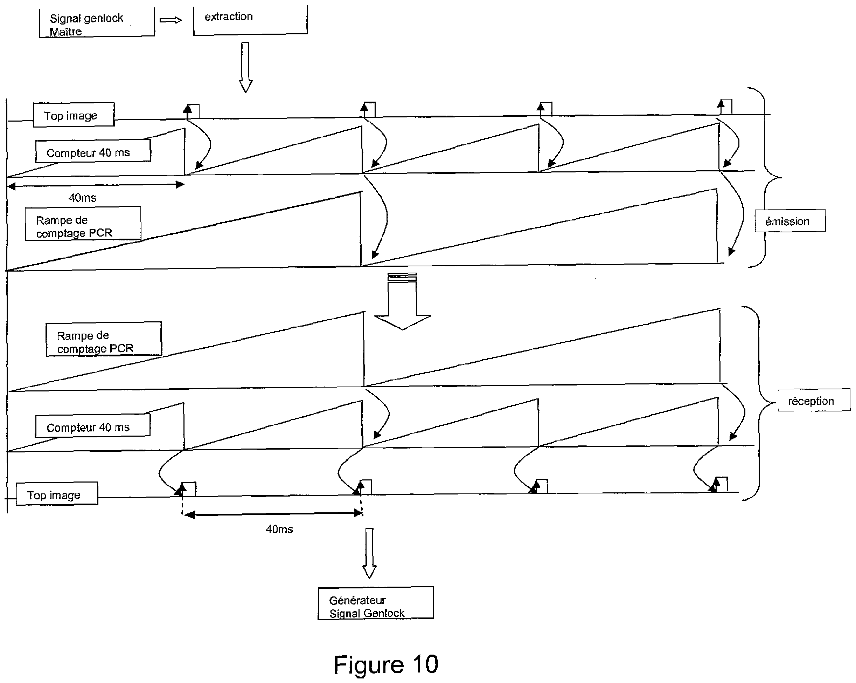

Comme cela est illustré Figure 10, les rampes de comptage PCR évoluent avec un modulo 40 ms à l'émission et à la réception. De cette manière, ces rampes offrent la possibilité de récupérer l'horloge vidéo.

**Coté émission :** à partir du signal genlock, on extrait les tops image. A partir des top image de récurrence 40 ms, on initialise un compteur 40 ms. Tous les « m » passages à zéro du compteur 40 ms, on initialise à zéro le compteur PCR.

**Coté réception :** la rampe de comptage PCR est régénérée par la PLL en phase avec la rampe de comptage côté émission. Au passage à zéro de cette rampe PCR, on initialise le compteur 40 ms qui ensuite évolue librement. Ce dernier restera forcément synchrone du compteur PCR puisqu'ils utilisent tous les deux la même horloge régénérée par la PLL. Le passage à zéro du compteur 40 ms permet de générer le top image. Il est maintenant possible de reconstruire avec ces informations le signal de genlock final côté réception.

Comme les rampes de comptage PCR sont rigoureusement synchrones entre elles, les compteurs 40 ms côté émission et réception sont également synchrones et donc les top image émission et réception sont nécessairement en phase. De plus, le top image côté réception n'a aucun jitter par rapport à l'horloge vidéo côté réception.

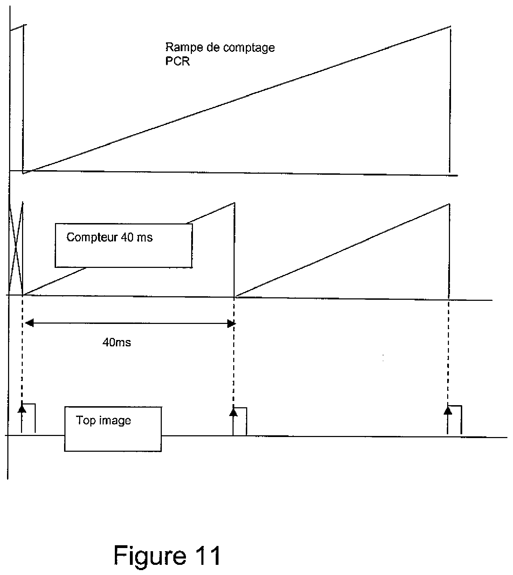

Dans le cas où le temps d'accrochage de la PLL est long (bande passante très basse), il peut s'avérer nécessaire d'avoir des temps de l'ordre de plusieurs dizaines de secondes pour la durée de la rampe de comptage PCR. Attendre la fin de l'excursion de comptage PCR pour remettre à zéro le compteur 40 ms pose, dans ce cas, un problème qui peut être simplement contourné par une émission de valeurs de PCR proches de la fin de comptage PCR lors de la phase de démarrage du système, comme cela est représenté Figure 11.

L'invention est décrite dans ce qui précède à titre d'exemple. Il est entendu que l'homme du métier est à même de réaliser différentes variantes de l'invention sans pour autant sortir du cadre du brevet.

## Revendications

1. Dispositif apte à émettre des paquets dans un réseau de communication par paquets comportant au moins deux stations, et comportant de surcroît:
- des moyens d'extraction (PLL) de tops image à partir d'un signal de synchronisation (Genlock);
- des moyens d'initialisation d'un premier compteur à partir desdits tops image, ledit premier compteur ayant des passages à zéro correspondant auxdits tops image ;
- des moyens d'initialisation d'un second compteur (PCR) tous les « m » passages à zéro du premier compteur ;
- des moyens d'échantillonnage (Latch) d'un signal de sortie du second compteur toutes les périodes *T_{ech},* où *T_{ech}* est issu d'une base de temps synchronisée sur toutes les stations dudit réseau ; et
- des moyens d'émission (IP/ETH) de paquets contenant ledit signal de sortie échantillonné du second compteur dans le réseau.

2. Dispositif apte à émettre des paquets dans un réseau de communication selon la revendication 1, **caractérisé en ce que** m est un entier naturel supérieur ou égal à deux.

3. Dispositif apte à émettre des paquets dans un réseau de communication selon la revendication 1 ou 2, **caractérisé en ce que** le signal de synchronisation est de type Genlock.

4. Dispositif apte à émettre des paquets dans un réseau de communication selon la revendication 1, 2 ou 3 **caractérisé en ce que** le second compteur est un compteur PCR (*« Program Clock Référence »).*

5. Dispositif apte à émettre des paquets dans un réseau de communication selon l'une quelconque des revendications précédentes, **caractérisé en ce que** la base de temps synchronisée sur toutes les stations du réseau est de type IEC61588.

6. Dispositif apte à recevoir des paquets dans un réseau de communication par paquets comportant au moins deux stations, et comportant de surcroît:
- des moyens de réception (IP) de paquets contenant des échantillons dudit réseau, lesdits échantillons provenant de données associées à un premier compteur (PCR) et échantillonnées toutes les périodes *T_{ech},* où *T_{ech}* est issu d'une base de temps synchronisée sur toutes les stations dudit réseau ;
- des moyens de régénération (PLL) d'un signal associé audit premier compteur et verrouillé auxdites périodes *T_{ech}* à l'aide d'une boucle à verrouillage de phase ;
- des moyens d'initialisation d'un second compteur tous les passages à zéro dudit premier compteur (PCR) ;
- des moyens de génération de tops image tous les passages à zéro du second compteur; et
- des moyens de reconstitution d'un signal de synchronisation (Genlock) à partir desdits tops image.

7. Dispositif apte à recevoir des paquets dans un réseau de communication selon la revendication 6, **caractérisé en ce que** le signal de synchronisation est de type Genlock.

8. Dispositif apte à recevoir des paquets dans un réseau de communication selon la revendication 6 ou 7 **caractérisé en ce que** le premier compteur est un compteur PCR (*« Program Clock Reference »).*

9. Dispositif apte à recevoir des paquets dans un réseau de communication selon l'une quelconque des 6 à 8, **caractérisé en ce que** la base de temps synchronisée sur toutes les stations du réseau est de type IEC61588.

## Patentansprüche

1. Vorrichtung, geeignet zum Senden von Paketen in einem Paket-Kommunikationsnetzwerk, bestehend aus mindestens zwei Stationen und darüber hinaus umfassend:
- Mittel zum Extrahieren (PLL) von Bildimpulsen aus einem Synchronisationssignal (Genlock),
- Mittel zum Initialisieren eines ersten Zählers von den besagten Bildimpulsen, wobei der besagte erste Zähler Nulldurchgänge hat, die den besagten Bildimpulsen entsprechen,
- Mittel zum Initialisieren eines zweiten Zählers (PCR) bei allen "m" Nulldurchgängen des ersten Zählers,
- Mittel zum Abtasten (Latch) eines Ausgangssignals des zweiten Zählers in allen Perioden *T_{ech},* in denen *T_{ech}* von einer Zeitbasis ausgeht, die mit allen Stationen des besagten Netzwerks synchronisiert ist, und
- Mittel zum Senden (IP/ETH) von Paketen, die das besagte abgetastete Ausgangssignal des zweiten Zählers im Netzwerk enthalten.

2. Vorrichtung, geeignet zum Senden von Paketen in einem Kommunikationsnetzwerk nach Anspruch 1, **dadurch gekennzeichnet, dass** m eine natürliche ganze Zahl ist, die zwei oder mehr beträgt.

3. Vorrichtung, geeignet zum Senden von Paketen in einem Kommunikationsnetzwerk nach Anspruch 1 oder 2, **dadurch gekennzeichnet, dass** das Synchronisationssignal vom Typ Genlock ist.

4. Vorrichtung, geeignet zum Senden von Paketen in einem Kommunikationsnetzwerk nach Anspruch 1, 2 oder 3, **dadurch gekennzeichnet, dass** der zweite Zähler ein PCR-Zähler ("Program Clock Reference") ist.

5. Vorrichtung, geeignet zum Senden von Paketen in einem Kommunikationsnetzwerk nach einem der vorstehenden Ansprüche, **dadurch gekennzeichnet, dass** die mit allen Stationen des Netzwerkes synchronisierte Zeitbasis vom Typ IEC61588 ist.

6. Vorrichtung, geeignet zum Empfangen von Paketen in einem Paket-Kommunikationsnetzwerk, bestehend aus mindestens zwei Stationen und darüber hinaus umfassend:
- Mittel zum Empfangen (IP) von Paketen, die Abtastungen des besagten Netzwerkes enthalten, wobei die besagten Abtastungen von Daten stammen, die mit einem ersten Zähler (PCR) verbunden sind und in allen Perioden *T_{ech}* abgetastet werden, in denen *T_{ech}* von einer Zeitbasis ausgeht, die mit allen Stationen des besagten Netzwerks synchronisiert ist,
- Mittel zum Regenerieren (PLL) eines Signals, das mit dem besagten ersten Zähler verbunden ist und in den Perioden *T_{ech}* mit Hilfe einer Phasenregelschleife gesperrt wird,
- Mittel zum Initialisieren eines zweiten Zählers bei allen Nulldurchgängen des besagten ersten Zählers PCR),
- Mittel zum Erzeugen von Bildimpulsen bei allen Nulldurchgängen des zweiten Zählers, und
- Mittel zum Wiederherstellen eines Synchronisationssignals (Genlock) aus den besagten Bildimpulsen.

7. Vorrichtung, geeignet zum Empfangen von Paketen in einem Kommunikationsnetzwerk nach Anspruch 6, **dadurch gekennzeichnet, dass** das Synchronisationssignal vom Typ Genlock ist.

8. Vorrichtung, geeignet zum Empfangen von Paketen in einem Kommunikationsnetzwerk nach Anspruch 6 oder 7, **dadurch gekennzeichnet, dass** der erste Zähler ein PCR-Zähler ("Program Clock Reference") ist.

9. Vorrichtung, geeignet zum Empfangen von Paketen in einem Kommunikationsnetzwerk nach einem der Ansprüche 6 bis 8, **dadurch gekennzeichnet, dass** die mit allen Stationen des Netzwerkes synchronisierte Zeitbasis vom Typ IEC61588 ist.

## Claims

1. Device able to emit packets in a packet communication network comprising at least two stations, further comprising:
- means for extracting (PLL) image cues from a synchronisation signal (Genlock),
- means for initialising a first counter from said image cues, said first counter having zero-crossings corresponding to said image cues,
- means for initialising a second counter (PCR) every "m" zero-crossing of the first counter,
- means for sampling (Latch) an output signal from the second counter at every T_{ech} period, where T_{ech} is from a time base synchronised on all the stations of said network, and
- means for emitting (IP/ETH) packets containing said sampled output signal of the second counter in the network.

2. Device able to emit packets in a communication network according to claim 1, **characterised in that** m is a natural integer greater than or equal to two.

3. Device able to emit packets in a communication network according to claim 1 or 2,
**characterised in that** the synchronisation signal is of Genlock type.

4. Device able to emit packets in a communication network according to claim 1, 2 or 3, **characterised in that** the second counter is a PCR ("Program Clock Reference") counter.

5. Device able to emit packets in a communication network according to any one of the preceding claims, **characterised in that** the time base synchronised on all the network stations is of IEC 61588 type.

6. Device able to receive packets in a packet communication network comprising at least two stations, further comprising:
means for receiving (IP) packets containing samples of said network, said samples coming from data associated with a first counter (PCR) and sampled every T_{ech} period, where T_{ech} is from a time base synchronised on all the stations of said network,
means for regenerating (PLL) from a signal associated with said first counter and locked at said periods T_{ech} using a phase-locked loop,
means for initialising a second counter every zero-crossing of said first counter (PCR),
means for generating image cues every zero-crossing of the second counter; and means for reconstituting a synchronisation signal (Genlock) from said image cues.

7. Device able to receive packets in a communication network according to claim 6, **characterised in that** the synchronisation signal is of Genlock type.

8. Device able to receive packets in a communication network according to claim 6 or 7, **characterised in that** the first counter is a PCR ("Program Clock Reference") counter.

9. Device able to receive packets in a communication network according to any one of the claims 6 to 8, **characterised in that** the time base synchronised on all the network stations is of IEC 61588 type.
